# FASCICULE DE BREVET EUROPEEN

(11) **EP 3 710 285 B1**
(45) Date de publication et mention de la délivrance du brevet: **05.01.2022**
(21) Numéro de dépôt: 18821712.9
(22) Date de dépôt: 16.11.2018
(51) Int. Cl.: B60C 1/00

(54) **PNEUMATIQUE POURVU D'UN FLANC EXTERNE COMPORTANT UN PLASTIFIANT LIQUIDE PRESENTANT UNE BASSE TEMPERATURE DE TRANSITION VITREUSE**
REIFEN MIT AUSSENWAND ENTHALTEND EINEN FLÜSSIGEN WEICHMACHER MIT NIEDRIGER GLASÜBERGANGSTEMPERATUR
TIRE WITH SIDE WALL CONTAINING A LIQUID PLASTICIZER HAVING LOW GLASS TRANSITION TEMPERATURE

(30) Priorité: 17.11.2017 FR 1760837
(43) Date de publication de la demande: 23.09.2020
(73) Titulaire: Compagnie Générale des Etablissements Michelin, 63000 Clermont-Ferrand (FR)
(72) Inventeur: CHOUVEL, Christophe, 63040 Clermont-Ferrand Cedex 9 (FR)
(74) Mandataire: Bocchi, Brigitte
(86) Numéro de dépôt international: PCT/FR2018/052863
(87) Numéro de publication internationale: WO 2019/097175

(56) Documents cités:
- WO-A1-2012/076456
- WO-A1-2017/093687

## Description

La présente invention est relative aux pneumatiques et plus particulièrement aux flancs externes de pneumatiques, c'est-à-dire, par définition, à des couches élastomériques situées radialement à l'extérieur du pneumatique, qui sont en contact avec l'air ambiant.

Il est possible de définir au sein du pneumatique trois types de zones :
- La zone radiale extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche au gaz de gonflage, parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bandes de roulements, des nappes de ceintures de pneumatiques ou toute autre couche qui n'est pas en contact avec l'air ambiant ou le gaz de gonflage du pneumatique.

Le flanc externe peut selon les besoins comporter une ou plusieurs nappes de protection, situées à l'extérieur par rapport à l'armature de carcasse, chargées de protéger le reste de la structure du flanc des agressions externes : chocs, déchirures ou autres perforations.

C'est par exemple le cas dans les flancs de certains pneumatiques destinés à des roulages sur des sols relativement agressifs, par exemple sur des véhicules de tourisme du type rallye ou encore sur des véhicules industriels hors la route du type chantier.

Ces nappes de protection doivent être suffisamment souples et déformables pour d'une part épouser au mieux la forme de l'obstacle sur lequel le flanc est susceptible de s'appuyer lors du roulage, et d'autre part s'opposer à la pénétration éventuelle de corps étrangers à l'intérieur de celui-ci. La satisfaction de tels critères nécessite généralement l'utilisation dans ces nappes ou couches de protection de fils de renforcement sous forme de câbles élastiques à torons métalliques combinant une haute élasticité et une énergie à la rupture élevée.

De telles nappes de protection métalliques pour flancs de pneumatiques sont bien connues, elles ont été décrites par exemple dans les brevets ou demandes de brevet FR 1 502 689 (ou US 3,464,477), EP 1 270 273 (ou US 2003/0005993).

Elles présentent toutefois un certain nombre d'inconvénients. Outre le fait qu'elles alourdissent de manière conséquente les flancs des pneumatiques, elles sont constituées de câbles à torons qui sont relativement coûteux, ceci à double titre : d'une part, ces derniers sont préparés en deux étapes, à savoir par fabrication préalable des torons puis assemblage par retordage de ces torons ; d'autre part, ils nécessitent généralement une torsion élevée de leurs fils (soit des pas d'hélice très courts), torsion certes indispensable pour leur conférer l'élasticité souhaitée mais impliquant des vitesses de fabrication réduites. Cet inconvénient se répercute bien entendu sur le coût des pneumatiques eux-mêmes.

Par conséquent, de telles modifications du flanc externe ne sont pas applicables à des pneumatiques destinés à des véhicules de tourisme.

Néanmoins, la demande des utilisateurs est forte pour disposer de pneumatiques, en particulier destinés à des véhicules de tourisme, qui comportent des flancs résistants aux agressions externes comme les chocs, les déchirures ou autres perforations. Il peut s'agir en particulier des contacts entre le pneumatique et un trottoir qui peuvent endommager fortement, voire perforer le pneumatique.

Par ailleurs, les flancs externes de pneumatiques comprennent généralement une composition de caoutchouc comportant du caoutchouc naturel. Néanmoins, il est connu de l'homme du métier que la résistance à la fissuration des compositions comprenant par exemple un coupage caoutchouc naturel / polybutadiène n'est pas optimale.

Il existe donc un besoin de développer un flanc externe de pneumatique qui soit plus résistant aux agressions extérieures.

Par ailleurs, le document WO 2013/087485 décrit un pneumatique pourvu d'un flanc externe, ledit flanc externe comprenant au moins une composition de caoutchouc comportant au moins, un ou plusieurs élastomères diéniques et un ou plusieurs élastomères thermoplastiques à bloc polyisobutylène. Il est indiqué également qu'un tel pneumatique présente une étanchéité améliorée. L'objectif dudit document n'est donc pas lié à la résolution d'un problème lié à la résistance aux agressions extérieures.

Ainsi, l'invention a pour objet un pneumatique pourvu d'un flanc externe, ledit flanc externe comprenant au moins une composition à base d'au moins :
- une matrice élastomérique comprenant au moins un élastomère diénique choisi dans le groupe constitué par les polymères butadiéniques ayant une température de transition vitreuse inférieure ou égale à -50°C, et un élastomère thermoplastique comprenant au moins un bloc élastomère et au moins un bloc thermoplastique, l'élastomère thermoplastique ne comprenant pas de bloc polyisobutylène,
- un plastifiant liquide présentant une température de transition vitreuse inférieure à -70°C,
- un système de réticulation, et
- une charge renforçante.

Le pneumatique selon l'invention comprenant le flanc externe permet de faire « glisser » l'agresseur extérieur sur le flanc, et en particulier évite la pénétration dans le flanc d'un agresseur extérieur ou au moins minimise la profondeur agressée du flanc lors du frottement de celui-ci sur l'agresseur extérieur.

De plus, ce flanc externe ne comporte pas nécessairement de protection métallique et il est par conséquent plus facile à préparer et de manière plus rapide. Ainsi, les coûts de revient du pneumatique selon l'invention sont réduits par rapport à des pneumatiques comprenant des flancs comprenant une protection métallique.

Enfin, dans le cas où le flanc externe ne comporte pas de protection métallique, il est plus souple, ce qui améliore la perception de confort pour l'utilisateur par rapport à un flanc comprenant des protections métalliques.

L'invention ainsi que ses avantages seront aisément compris à la lumière de la description et des exemples de réalisation qui suivent.

### I- DÉFINITIONS

Par l'expression "partie en poids pour cent parties en poids d'élastomère" (ou pce), il faut entendre au sens de la présente invention, la partie, en masse pour cent parties en masse d'élastomères, qu'ils soient thermoplastiques ou non. En d'autres termes, les élastomères thermoplastiques sont des élastomères.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants pouvant réagir et/ou étant destinés à réagir entre eux, au moins partiellement, lors des différentes phases de fabrication de la composition.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition.

Dans le cadre de l'invention, les composés comprenant du carbone mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Sauf indications contraires, les composants décrits dans la présente font partie de la composition de flan externe du pneumatique selon la présente invention. Leurs taux d'incorporation respectifs correspondent à leurs taux dans la composition de flanc externe du pneumatique selon la présente invention. Ainsi, sauf indication contraire, lorsque l'on utilise l'expression « la composition », on fait référence à la composition de flanc externe du pneumatique selon la présente invention.

Toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Matrice élastomérique

La matrice élastomérique de la composition de flanc externe du pneumatique selon l'invention comprend au moins un élastomère diénique choisi dans le groupe constitué par les polymères butadiéniques ayant une température de transition vitreuse inférieure ou égale à -50°C, et un élastomère thermoplastique comprenant au moins un bloc élastomère et au moins un bloc thermoplastique, l'élastomère thermoplastique ne comprenant pas de bloc polyisobutylène.

### II-1-a Elastomère diénique

Selon l'invention, la matrice élastomérique comprend au moins un élastomère diénique est choisi dans le groupe constitué par les polymères butadiéniques ayant une température de transition vitreuse inférieure (Tg) ou égale à -50°C.

Par élastomère diénique, doit être compris de manière connue un élastomère issu au moins en partie, c'est-à-dire un homopolymère ou un copolymère, de monomères diènes. De manière connue en soi, un monomère diène est un monomère comprenant deux doubles liaisons carbone-carbone, conjuguées ou non.

Ainsi, par élastomères diéniques choisi dans le groupe constitué par les polymères butadiéniques, doit être compris un élastomère issu au moins en partie, c'est-à-dire un homopolymère ou un copolymère, de monomères butadiènes.

De préférence, le ou les élastomères diéniques choisis dans le groupe constitué par les polymères butadiéniques ayant une température de transition vitreuse inférieure ou égale à -50°C, sont choisis dans le groupe constitué par les homopolymères obtenus par polymérisation d'un monomère butadiène ; les copolymères obtenus par copolymérisation d'un ou plusieurs monomères diènes conjugués, dont l'un au moins est un monomère butadiène, entre eux ou avec un ou plusieurs composés vinyles aromatiques ayant de 8 à 20 atomes de carbone ; et les mélanges de ces polymères (étant entendu que ces élastomères présentent une température de transition vitreuse inférieure (Tg) ou égale à -50°C).

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène.

A titre de composés vinyles aromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Lorsque le ou les élastomères diéniques choisis dans le groupe constitué par les polymères butadiéniques ayant une température de transition vitreuse inférieure ou égale à -50°C, sont choisis parmi les copolymères obtenus par copolymérisation d'un ou plusieurs diènes conjugués, dont l'un au moins est un monomère butadiène, entre eux ou avec un ou plusieurs composés vinyles aromatiques ayant de 8 à 20 atomes de carbone, ceux-ci peuvent contenir entre 99 % et 20 % en poids d'unités butadiènes et entre 1 % et 80 % en poids d'unités vinyles aromatiques.

Le ou les élastomères diéniques choisis dans le groupe constitué par les polymères butadiéniques ayant une température de transition vitreuse inférieure ou égale à -50°C, utilisables selon l'invention, peuvent avoir toute microstructure qui est fonction des conditions de polymérisation utilisées, notamment de la présence ou non d'un agent modifiant et/ou randomisant et des quantités d'agent modifiant et/ou randomisant employées.

Le ou les élastomères diéniques choisis dans le groupe constitué par les polymères butadiéniques ayant une température de transition vitreuse inférieure ou égale à -50°C, utilisables selon l'invention, peuvent par exemple être préparés en dispersion ou en solution; ils peuvent être couplés et/ou étoilés ou encore fonctionnalisés avec un agent de couplage et/ou d'étoilage ou de fonctionnalisation. Pour un couplage avec du noir de carbone, on peut citer par exemple des groupes fonctionnels comprenant une liaison C-Sn ou des groupes fonctionnels aminés tels que la benzophénone par exemple ; pour un couplage à une charge inorganique renforçante telle que la silice, on peut citer par exemple des groupes fonctionnels silanol ou polysiloxane ayant une extrémité silanol (tels que décrits par exemple dans FR 2 740 778 ou US 6,013,718), des groupes alkoxysilane (tels que décrits par exemple dans FR 2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909 ou US 6,503,973).

Comme autres exemples d'élastomères fonctionnalisés, on peut citer également des élastomères (tels que SBR ou BR) du type époxydés.

A titre d'élastomère diénique choisi dans le groupe constitué par les polymères butadiéniques ayant une température de transition vitreuse inférieure ou égale à -50°C, utilisable dans la composition du flanc externe du pneumatique selon l'invention, conviennent en particulier les polybutadiènes ayant une teneur (% molaire) en unités -1,2 comprise entre 4 % et 80 % ou ceux ayant une teneur (% molaire) en cis-1,4 supérieure à 80 %, les copolymères de butadiène-styrène et en particulier ceux ayant une température de transition vitreuse, Tg, (mesurée selon ASTM D3418 (1999)) comprise entre -50°C et - 70°C et plus particulièrement entre -50°C et -60°C, une teneur en styrène comprise entre 5 % et 60 % en poids et plus particulièrement entre 20 % et 50 %, une teneur (% molaire) en liaisons -1,2 de la partie butadiénique comprise entre 4 % et 75 %, une teneur (% molaire) en liaisons trans-1,4 comprise entre 10 % et 80 %, les copolymères de butadiène-isoprène et notamment ceux ayant une teneur en isoprène comprise entre 5 % et 90 % en poids et une Tg de -50°C à -80°C. Dans le cas des copolymères de butadiène-styrène-isoprène, conviennent notamment ceux ayant une teneur en styrène comprise entre 5 % et 50 % en poids, et plus particulièrement comprise entre 10 % et 40 %, une teneur en isoprène comprise entre 15 % et 60 % en poids, et plus particulièrement entre 20 % et 50 %, une teneur en butadiène comprise entre 5 % et 50 % en poids, et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans -1,4 de la partie isoprénique comprise entre 10 % et 50 %, et plus généralement tout copolymère butadiène-styrène-isoprène ayant une Tg comprise entre -70°C et -50°C.

De manière particulièrement préférée, le ou les élastomères diéniques choisis dans le groupe constitué par les polymères butadiéniques ayant une température de transition vitreuse inférieure ou égale à -50°C, sont choisis dans le groupe constitué par les polybutadiènes (en abrégé « BR »), les copolymères de butadiène, de préférence les copolymères de butadiène-styrène (SBR), les copolymères d'isoprène-butadiène (BIR) et les copolymères d'isoprène-butadiène-styrène (SBIR), et les mélanges de ces élastomères (étant entendu que ces élastomères présentent une température de transition vitreuse inférieure (Tg) ou égale à -50°C).

De préférence encore le ou les élastomères diéniques choisis dans le groupe constitué par les polymères butadiéniques ayant une température de transition vitreuse inférieure ou égale à -50°C, sont choisis dans le groupe constitué par les polybutadiènes, les copolymères de butadiène-styrène, et les mélanges de ces élastomères (étant entendu que ces élastomères présentent une température de transition vitreuse inférieure (Tg) ou égale à -50°C).

De préférence, le taux d'élastomères diéniques choisis dans le groupe constitué par les polymères butadiéniques ayant une température de transition vitreuse inférieure ou égale à -50°C, dans la composition utilisable dans le flanc du pneumatique selon l'invention, est compris dans un domaine allant de 50 à 99 pce, de préférence de 55 à 95 pce, plus préférentiellement de 60 à 90 pce, plus préférentiellement encore de 65 à 85 pce.

### II-1-b Elastomère thermoplastique

Selon l'invention, la matrice élastomérique comprend au moins un élastomère thermoplastique comprenant au moins un bloc élastomère et au moins un bloc thermoplastique, l'élastomère thermoplastique ne comprenant pas de bloc polyisobutylène.

Sauf indication contraire, dans la présente, lorsque l'on fait référence à « l'élastomère thermoplastique », on désigne l'au moins un élastomère thermoplastique comprenant au moins un bloc élastomère et au moins un bloc thermoplastique, l'élastomère thermoplastique ne comprenant pas de bloc polyisobutylène.

Par élastomère thermoplastique (TPE), on entend, de manière connue, un polymère de structure intermédiaire entre un polymère thermoplastique et un élastomère. Un élastomère thermoplastique est constitué d'un ou plusieurs segments rigides « thermoplastiques » reliés à un ou plusieurs segments souples « élastomères ».

Ainsi, le ou les élastomères thermoplastiques de la composition du flanc externe utilisable selon l'invention comprennent au moins un bloc élastomère et au moins un bloc thermoplastique.

Typiquement, chacun de ces segments ou blocs contient au minimum plus de 5, généralement plus de 10 unités de base.

Ainsi, une composition dans laquelle une résine ou un polymère thermoplastique et un élastomère sont mélangés ne constitue pas un élastomère thermoplastique au sens de la présente invention.

Dans la présente demande, lorsqu'il est fait référence à la température de transition vitreuse d'un élastomère thermoplastique, il s'agit de la température de transition vitreuse relative au bloc élastomère (sauf indication contraire). En effet, de manière connue, les élastomères thermoplastiques présentent deux pics de température de transition vitreuse (Tg, mesurée selon ASTM D3418 (1999)), la température la plus basse étant relative à la partie élastomère de l'élastomère thermoplastique, et la température la plus haute étant relative à la partie thermoplastique de l'élastomère thermoplastique. Ainsi, les blocs souples des élastomères thermoplastiques se définissent généralement par une Tg inférieure ou égale à la température ambiante (25°C), tandis que les blocs rigides ont une Tg supérieure ou égale à 80°C. Pour être de nature à la fois élastomère et thermoplastique, l'élastomère thermoplastique doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Préférentiellement, le bloc élastomère de l'élastomère thermoplastique présente une température de transition vitreuse inférieure ou égale à -50°C.

De manière préférentielle également, la température de transition vitreuse des élastomères thermoplastiques (c'est-à-dire du ou des blocs élastomères des élastomères thermoplastiques) utilisables selon l'invention est supérieure à -100°C.

La masse moléculaire moyenne en nombre (notée Mn) des élastomères thermoplastiques est préférentiellement comprise entre 30 000 et 500 000 g/mol, plus préférentiellement comprise entre 40 000 et 400 000 g/mol, plus préférentiellement encore entre 50 000 et 300 000 g/mol. En dessous des minima indiqués, la cohésion entre les chaînes d'élastomère des élastomères thermoplastiques, notamment en raison de leur dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la mise en œuvre.

La masse moléculaire moyenne en nombre (Mn) des élastomères thermoplastiques est déterminée de manière connue, par chromatographie d'exclusion stérique (SEC). L'échantillon est préalablement solubilisé dans un solvant adapté à une concentration d'environ 2 g/L ; puis la solution est filtrée sur filtre de porosité 0,45 µm avant injection. L'appareillage utilisé est une chaîne chromatographique « WATERS alliance ». Le volume injecté de la solution de l'échantillon de polymère est de 100 µl. Le détecteur est un réfractomètre différentiel « WATERS 2410 » et son logiciel associé d'exploitation des données chromatographiques est le système « EMPOWER ». Les conditions sont adaptables par l'homme du métier. Par exemple dans le cas des TPE de type COPE, le solvant d'élution est l'hexafluoroisopranol avec du sel de trifluoroacétate de sodium à une concentration de 0,02 M, le débit de 0,5 ml/min, la température du système de 35°C et la durée d'analyse de 90 min. On utilise un jeu de trois colonnes PHENOMENEX en série, de dénominations commerciales « PHENOGEL » (tailles de pores : 105, 104, 103 A). Par exemple dans le cas des élastomères thermoplastiques styréniques, l'échantillon est préalablement solubilisé dans du tétrahydrofuranne à une concentration d'environ 1 g/L ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 mL/mn, la température du système de 35°C et la durée d'analyse de 90 mn. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µL. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité (Ip = Mw/Mn avec Mw masse moléculaire moyenne en poids) du ou des élastomères thermoplastiques est de préférence inférieur à 3 ; plus préférentiellement inférieur à 2, et encore plus préférentiellement inférieur à 1,5.

Les élastomères thermoplastiques utilisables selon l'invention peuvent être des copolymères avec un petit nombre de blocs (moins de 5, typiquement 2 ou 3), auquel cas ces blocs ont de préférence des masses élevées, supérieures à 15 000 g/mol.

Les élastomères thermoplastiques peuvent être également des copolymères avec un grand nombre de blocs (plus de 30, typiquement de 50 à 500) plus petits, auquel cas ces blocs ont de préférence des masses peu élevées, par exemple de 500 à 5000 g/mol, ces élastomères thermoplastiques seront appelés élastomères thermoplastiques multiblocs par la suite.

Les élastomères thermoplastiques utilisables selon l'invention peuvent se présenter sous une forme linéaire.

Les élastomères thermoplastiques peuvent être notamment des copolymères diblocs : bloc thermoplastique/bloc élastomère. Ils peuvent également être des copolymères triblocs : bloc thermoplastique/bloc élastomère/bloc thermoplastique, c'est-à-dire un bloc élastomère central et un bloc thermoplastique terminal à chacune des deux extrémités du bloc élastomère. Comme élastomères thermoplastiques conviennent aussi les mélanges de copolymères tribloc et de copolymères dibloc décrits dans la présente. En effet les copolymères tribloc peuvent contenir une fraction minoritaire pondérale de copolymère dibloc constitué d'un segment rigide styrénique et d'un segment souple diénique, le bloc rigide et le bloc souple étant respectivement de même nature chimique, en particulier de même microstructure, que les blocs rigide et souple du tribloc. La présence de copolymère dibloc dans le copolymère tribloc résulte généralement du procédé de synthèse du copolymère tribloc qui peut conduire à la formation de produit secondaire comme le copolymère dibloc. Le plus souvent le pourcentage de copolymère dibloc dans le copolymère tribloc n'excède pas 40% en masse de copolymère tribloc.

Les élastomères thermoplastiques peuvent également être constitués d'un enchaînement linéaire de blocs élastomères et de blocs thermoplastiques (élastomères thermoplastiques multiblocs).

Selon une deuxième variante, les élastomères thermoplastiques utilisables selon l'invention se présentent sous une forme étoilée à au moins trois branches.

Par exemple, les élastomères thermoplastiques peuvent alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une troisième variante, les élastomères thermoplastiques utilisables selon l'invention se présentent sous une forme branchée ou dendrimère. Les élastomères thermoplastiques peuvent alors se composer d'un bloc élastomère branché ou dendrimère et d'un bloc thermoplastique, situé à l'extrémité des branches du bloc élastomère dendrimère.

Comme indiqué précédemment, le ou les élastomères thermoplastiques utilisables selon l'invention comprennent au moins un bloc élastomère et au moins un bloc thermoplastique, le ou les blocs élastomères ne désignant pas un ou des blocs polyisobutylène.

Par « bloc polyisobutylène », il faut entendre au sens de la présente invention un bloc composé majoritairement du monomère isobutylène polymérisé.

Les blocs élastomères des élastomères thermoplastiques utilisables selon l'invention, peuvent être tous les élastomères connus de l'homme de l'art, à l'exception des élastomères thermoplastiques dont le ou les blocs élastomères désignent un ou des blocs polyisobutylène.

On distingue généralement les blocs élastomères saturés des blocs élastomères insaturés. Par bloc élastomère saturé, on entend que ce bloc comprend essentiellement des motifs ne comprenant pas d'insaturations éthyléniques (c'est-à-dire des doubles liaisons carbone-carbone), c'est à dire que les motifs comprenant des insaturations éthyléniques représentent moins de 15 % en moles par rapport à l'ensemble des motifs du bloc considéré.

Les blocs élastomères saturés sont généralement constitués par la polymérisation de monomères éthyléniques. On peut citer en particulier les blocs polyalkylène, à l'exception des blocs polyisobutylène, tels que les copolymères statistiques éthylène-propylène ou éthylène-butylène. Ces blocs élastomères saturés peuvent aussi être obtenus par hydrogénation de blocs élastomères insaturés.

Il peut aussi s'agir de blocs aliphatiques issus de la famille des polyéthers, des polyesters, ou des polycarbonates. En particulier, les blocs élastomères saturés peuvent notamment être constitués par des polyéthers, notamment les polytétraméthylène glycol (PTMG), les polyéthylènes glycols (PEG).

Selon une variante, les monomères polymérisés pour former un bloc élastomère saturé peuvent être copolymérisés, de manière statistique, avec au moins un autre monomère de manière à former un bloc élastomère saturé. Selon cette variante, la fraction molaire en monomère polymérisé autre qu'un monomère éthylénique, par rapport au nombre total de motifs du bloc élastomère saturé, doit être telle que ce bloc garde ses propriétés d'élastomère saturé. Avantageusement la fraction molaire de cet autre co-monomère peut aller de 0 à 50 %, plus préférentiellement de 0 à 45 % et encore plus préférentiellement de 0 à 40 %.

Par exemple, des diènes conjugués en C₄-C₁₄ peuvent être copolymérisés avec les monomères éthyléniques, les motifs éthyléniques restant majoritaires comme vu ci-dessus.

De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-néopentylbutadiène, le 1,3-cyclopentadiène, le 1,3-cyclohexadiène, le 1-vinyl-1,3-cyclohexadiène et un mélange de ces diènes conjugués, et de préférence, ces diènes conjugués sont choisis parmi l'isoprène et un mélange de diènes conjugués contenant de l'isoprène.

Par bloc élastomère insaturé, on entend que ce bloc est issu au moins en partie de monomères diènes conjugués, ayant un taux de motifs ou unités d'origine diénique (diènes conjugués) qui est supérieur à 15 % en moles.

Quand les blocs élastomères des élastomères thermoplastiques utilisables selon l'invention sont insaturés, ils peuvent être choisis parmi :
a) tout homopolymère obtenu par polymérisation d'un monomère diène conjugué ayant de 4 à 12 atomes de carbone ;
b) tout copolymère obtenu par copolymérisation d'un ou plusieurs diènes conjugués entre eux ou avec un ou plusieurs composés vinyle aromatique ayant de 8 à 20 atomes de carbone ;
c) un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
d) un copolymère d'isobutène et d'isoprène (caoutchouc diénique butyl), ainsi que les versions halogénés, en particulier chlorées ou bromées, de ce type de copolymère.

A titre de diènes conjugués conviennent notamment l'isoprène, le butadiène-1,3, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-l,3-pentadiène, le 2,5-diméthyl-l,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, le 1-vinyl-1,3-cyclohexadiène, et un mélange de ces diènes conjugués; de préférence, ces diènes conjugués sont choisis parmi l'isoprène, le butadiène et un mélange contenant de l'isoprène et/ou du butadiène.

Selon une variante, les monomères polymérisés pour former un bloc élastomère insaturé peuvent être copolymérisés, de manière statistique, avec au moins un autre monomère de manière à former un bloc élastomère insaturé. Selon cette variante, la fraction molaire en monomère polymérisé autre qu'un monomère diénique, par rapport au nombre total de motifs du bloc élastomère insaturé, doit être telle que ce bloc garde ses propriétés d'élastomère insaturé. Avantageusement la fraction molaire de cet autre co-monomère peut aller de 0 à 50 %, plus préférentiellement de 0 à 45 % et encore plus préférentiellement de 0 à 40 %.

A titre d'illustration, cet autre monomère susceptible de copolymériser avec le monomère premier peut être choisi parmi les monomères éthyléniques tels que l'éthylène, le propylène, le butylène, les monomères de type vinylaromatiques ayant de 8 à 20 atomes de carbone tels que définis ci-après ou encore, il peut s'agir d'un monomère tel que l'acétate de vinyle.

A titre de composés vinylaromatiques conviennent notamment les monomères styréniques, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Ainsi, selon un mode de réalisation préférentiel, le au moins un bloc élastomère peut être un copolymère statistique de type styrène-butadiène (SBR), ce copolymère pouvant être partiellement hydrogéné. Ce bloc SBR possède de préférence une Tg (température de transition vitreuse) mesurée par DSC selon la norme ASTM D3418 de 1999, inférieure à -50°C. De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée. De manière préférentielle, on utilise notamment un bloc SBR ayant une teneur en styrène comprise, par exemple dans un domaine allant de 10 % à 60 % en poids, de préférence de 20 % à 50 % en poids, et pour la partie butadiénique, une teneur en liaisons -1,2 comprise dans un domaine allant de 4 % à 75 % (% molaire), et une teneur en liaisons -1,4 comprise dans un domaine allant de 20 % et 96 % (% molaire).

La détermination du taux d'hydrogénation est réalisée par une analyse RMN. Les spectres sont acquis sur un spectromètre Avance 500 MHz BRUKER équipé d'une Cryosonde 1H-X 5 mm. L'expérience RMN 1H quantitative, utilise une séquence simple impulsion 30° et un délai de répétition de 5 secondes entre chaque acquisition. 64 accumulations sont réalisées. Les échantillons (environ 25 mg) sont solubilisés dans le CS2 environ 1 mL, 100 µl de cyclohexane deutéré sont ajoutés pour faire le lock pendant l'acquisition. Les déplacements chimiques sont calibrés par rapport à l'impureté protonée du CS2 δppm 1H à 7,18 ppm référencé sur le TMS (δppm 1H à 0 ppm). Le spectre RMN 1H permet de quantifier la microstructure par intégration des massifs de signaux caractéristiques des différents motifs :
- le styrène provenant du SBR et des blocs polystyrène. Il est quantifiable dans la zone des aromatiques entre 6,0 ppm et 7,3 ppm pour 5 protons (en retirant l'intégrale du signal de l'impureté du CS2 à 7,18 ppm).
- le PB1-2 provenant du SBR. Il est quantifiable dans la zone des éthyléniques entre 4,6 ppm et 5,1 ppm pour 2 protons.
- le PB1-4 provenant du SBR. Il est quantifiable dans la zone des éthyléniques entre 5,1 ppm et 6,1 ppm pour 2 protons et en supprimant 1 proton du motif PB1-2.
- le PB1-2 hydrogéné provenant de l'hydrogénation et ne présentant que des protons aliphatiques. Les CH3 pendant du PB1-2 hydrogéné ont été identifiés et sont quantifiables dans la zone des aliphatiques entre 0,4 et 0,8 ppm pour 3 protons.
- le PB1-4 hydrogéné provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit : %molaire d'un motif = Intégrale 1H d'un motif/ Σ(intégrales 1H de chaque motif). Par exemple pour un motif de styrène : %molaire du styrène = (Intégrale 1H du styrène) / (Intégrale 1H du styrène + Intégrale 1H du PB1-2 + Intégrale 1H du PB1-4 + Intégrale 1H du PB1-2 hydrogéné + Intégrale 1H du PB1-4 hydrogéné).

De préférence, dans les élastomères thermoplastiques utiles aux besoins de l'invention, le bloc élastomère SBR est hydrogéné de telle manière qu'une proportion allant de 10 à 50 % molaire des doubles liaisons dans la portion butadiène sont hydrogénées.

De préférence pour l'invention, les blocs élastomères des élastomères thermoplastiques présentent une masse moléculaire moyenne en nombre (Mn) allant de 25 000 g/mol à 350 000 g/mol, de préférence de 35 000 g/mol à 250 000 g/mol de manière à conférer aux élastomères thermoplastiques de bonnes propriétés élastomériques et une tenue mécanique suffisante et compatible avec l'utilisation en flanc externe de pneumatique.

De manière particulièrement préférée dans l'invention, le ou les blocs élastomères de l'élastomère thermoplastique sont choisis dans le groupe constitué par les polyisoprènes, les polybutadiènes, les copolymères de styrène et de butadiène, et les mélanges de ces élastomères, ces élastomères étant non hydrogénés ou partiellement hydrogénés.

Comme expliqué précédemment, les élastomères thermoplastiques utilisables selon l'invention comprennent au moins un bloc thermoplastique.

Par bloc thermoplastique, on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

En effet, dans le cas d'un polymère semi-cristallin, on peut observer une température de fusion supérieure à la température de transition vitreuse. Dans ce cas, on prend en compte pour la définition ci-dessus la température de fusion et non pas la température de transition vitreuse.

Le ou les blocs thermoplastiques peuvent être constitués à partir de monomères polymérisés de diverses natures.

En particulier, le ou les blocs thermoplastiques de l'élastomère thermoplastique peuvent être choisis dans le groupe constitué par les polyoléfines (polyéthylène, polypropylène), les polyuréthanes, les polyamides, les polyesters, les polyacétals, les polyéthers (polyoxyde d'éthylène, polyphénylène éther), les polysulfures de phénylène, les polyfluorés (FEP, PFA, ETFE), les polystyrènes, les polycarbonates, les polysulfones, le polyméthylméthacrylate, le polyétherimide, les copolymères thermoplastiques (tels que le copolymère acrylonitrile-butadiène-styrène (ABS)), et les mélanges de ces polymères.

De manière particulièrement préférée dans l'invention, le ou les blocs thermoplastiques de l'élastomère thermoplastique, sont choisis dans le groupe constitué par les polystyrènes, les polyesters, les polyamides, les polyuréthanes, et les mélanges de ces polymères.

De manière tout particulièrement préférée dans l'invention, le ou les blocs thermoplastiques sont choisis dans le groupe constitué par les polystyrènes, les polyesters, les polyamides, et les mélanges de ces polymères.

Le ou les blocs thermoplastiques peuvent également être obtenus à partir des monomères choisis parmi :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A: Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Selon une variante de l'invention, les monomères ci-dessus peuvent être copolymérisés avec au moins un autre monomère tant que celui-ci ne modifie pas le caractère thermoplastique du bloc, c'est-à-dire que le bloc a une température de transition vitreuse, ou une température de fusion dans le cas des polymères semi-cristallins, supérieure ou égale à 80°C.

A titre d'illustration, cet autre monomère susceptible de copolymériser avec le monomère polymérisé, peut être choisi parmi les monomères diènes, plus particulièrement, les monomères diènes conjugués ayant de 4 à 14 atomes de carbone, et les monomères de type vinylaromatiques ayant de 8 à 20 atomes de carbone, tels qu'ils sont définis dans la partie concernant le bloc élastomère.

Le ou les blocs thermoplastiques peuvent être choisis parmi les polystyrènes et les polymères comprenant au moins un bloc polystyrène.

Concernant les polystyrènes, ceux-ci sont obtenus à partir de monomères styréniques.

Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans les élastomères thermoplastiques utilisables selon l'invention, est compris entre 5 % et 50 %, préférentiellement compris entre 10 % et 40 %.

La proportion des blocs thermoplastiques dans les élastomères thermoplastiques utilisables selon l'invention est déterminée d'une part par les propriétés de thermoplasticité que doivent présenter les élastomères thermoplastiques.

Le ou les blocs thermoplastiques sont préférentiellement présents dans des proportions suffisantes pour préserver le caractère thermoplastique des élastomères thermoplastiques utilisables selon l'invention. Le taux minimum de blocs thermoplastiques dans les élastomères thermoplastiques peut varier en fonction des conditions d'utilisation des élastomères thermoplastiques.

D'autre part, la capacité des élastomères thermoplastiques à se déformer lors de la préparation du pneu peut également contribuer à déterminer la proportion des blocs thermoplastiques dans les élastomères thermoplastiques utilisables selon l'invention.

De préférence, les blocs thermoplastiques des élastomères thermoplastiques présentent une masse moléculaire moyenne en nombre (Mn) allant de 5 000 g/mol à 150 000 g/mol, de manière à conférer aux élastomères thermoplastiques de bonnes propriétés élastomériques et une tenue mécanique suffisante et compatible avec l'utilisation en flanc externe de pneumatique.

Selon l'invention, le ou les élastomères thermoplastiques peuvent être choisis dans le groupe constitué par les copolymères à blocs styrène/ butadiène (SB), styrène/ isoprène (SI), styrène/ butadiène/ isoprène (SBI), styrène/ butadiène/ isoprène/ styrène (SBIS), styrène/butadiène/styrène (SBS), styrène/isoprène/styrène (SIS), styrène/copolymère butadiène-styrène éventuellement partiellement hydrogéné/styrène (SOE), et les mélanges de ces copolymères.

De manière préférée dans l'invention, le ou les élastomères thermoplastiques sont choisis dans le groupe constitué par les copolymères à blocs styrène/butadiène/styrène (SBS), styrène/isoprène/styrène (SIS), styrène/copolymère butadiène-styrène éventuellement partiellement hydrogéné/styrène (SOE), et les mélanges de ces copolymères.

De préférence encore le ou les élastomères thermoplastiques sont choisis dans le groupe constitué par les copolymères à blocs styrène/butadiène/styrène (SBS), styrène/copolymère butadiène-styrène éventuellement partiellement hydrogéné/styrène (SOE), et les mélanges de ces copolymères.

De manière particulièrement avantageuse, les copolymères à blocs styrène/copolymère butadiène-styrène éventuellement partiellement hydrogéné/styrène (SOE) sont des copolymères à blocs styrène/copolymère butadiène-styrène partiellement hydrogéné/styrène (SOE). De préférence, les copolymères à blocs styrène/copolymère butadiène-styrène partiellement hydrogéné/styrène présente un taux molaire d'hydrogénation compris dans un domaine allant de 30 à98 %, de préférence de 50 à 98%, de préférence encore de 85 à 97%.

A titre d'exemples d'élastomères thermoplastiques commercialement disponibles et utilisables selon l'invention, on peut citer les élastomères de type SIS commercialisés par Kuraray, sous le nom « Hybrar 5125 », ou commercialisés par Kraton sous le nom de « D 1161 » ou encore les élastomères de type SBS linéaire commercialisé par Polimeri Europa sous la dénomination « Europrene SOL T 166 » ou SBS étoilé commercialisés par Kraton sous la dénomination « D1184 ». On peut également citer les élastomères commercialisés par la société Dexco Polymers sous la dénomination de « Vector » (par exemple « Vector 4114 », « Vector 8508 »).

De préférence, le taux en élastomère(s) thermoplastique(s) comprenant au moins un bloc élastomère et au moins un bloc thermoplastique, le ou les blocs élastomères ne désignant pas un ou des blocs polyisobutylène, dans la composition, est compris dans un domaine allant de 1 à 50 pce, de préférence de 5 à 45 pce, plus préférentiellement de 10 à 40 pce, plus préférentiellement encore de 15 à 35 pce.

De manière particulièrement préférée, le ou les élastomères thermoplastiques comprenant au moins un bloc élastomère et au moins un bloc thermoplastique, le ou les élastomères ne désignant pas un ou des blocs polyisobutylène, sont les seuls élastomères thermoplastiques de la matrice élastomérique.

### II-1-c Autres élastomères

La matrice élastomérique de la composition du flanc externe utilisable selon l'invention peut comprendre des élastomères diéniques ou thermoplastiques autres que l'élastomère diénique choisi dans le groupe constitué par les polymères butadiéniques ayant une température de transition vitreuse inférieure ou égale à -50°C, et l'élastomère thermoplastique comprenant au moins un bloc élastomère et au moins un bloc thermoplastique, l'élastomère thermoplastique ne comprenant pas de bloc polyisobutylène, mais cela n'est pas obligatoire ni préférable.

Avantageusement, la composition du flanc externe utilisable selon l'invention ne comprend pas d'autre élastomère que l'élastomère diénique choisi dans le groupe constitué par les polymères butadiéniques ayant une température de transition vitreuse inférieure ou égale à -50°C, et l'élastomère thermoplastique comprenant au moins un bloc élastomère et au moins un bloc thermoplastique, l'élastomère thermoplastique ne comprenant pas de bloc polyisobutylène, ou en comprend moins de 20 pce, de préférence moins de 10 pce, de préférence encore moins de 10 pce.

### 11-2 Plastifiant liquide

La composition de flanc externe du pneumatique selon l'invention comprend un plastifiant liquide présentant une température de transition vitreuse inférieure à -70°C.

Avantageusement, plastifiant liquide présentant une température de transition vitreuse inférieure à -70°C comprend de 45 à 100% en poids, de préférence de 60 à 100% en poids, de préférence encore de 70 à 100% en poids, de triester d'acide gras insaturé de glycérol. De manière particulièrement avantageuse, l'acide gras insaturé du triester d'acide gras insaturé est un acide gras insaturé en C₁₂-C₂₂ (c'est-à-dire comportant de 12 à 22 atomes de carbone).

Par triester et acide gras, on entend également un mélange de triesters ou un mélange d'acides gras, respectivement. L'acide gras du triester d'acide gras insaturé de glycérol comprend de préférence plus de 60% en poids, plus préférentiellement plus de 70% en poids, d'un acide gras insaturé en C₁₈, c'est-à-dire choisi dans le groupe constitué par l'acide oléique, l'acide linoléique, l'acide linolénique et leurs mélanges. Plus préférentiellement, qu'il soit d'origine synthétique ou naturelle, l'acide gras utilisé comprend plus de 60% en poids, plus préférentiellement encore plus de 70% en poids d'acide oléique.

De manière particulièrement avantageuse, le triester d'acide gras insaturé de glycérol est du trioléate de glycérol Parmi les trioléates de glycérol préférentiels, on citera notamment comme exemples de composés naturels, les huiles végétales de tournesol ou de colza.

Ainsi, selon l'invention, le plastifiant liquide présentant une température de transition vitreuse inférieure à -70°C peut être une huile végétale, de préférence une huile végétale choisi dans le groupe constitué par l'huile de tournesol, l'huile de colza et leurs mélanges (étant entendu qu'elle présente une Tg inférieure à -70°C). De préférence, l'huile végétale, de préférence l'huile végétale choisie dans le groupe constitué par l'huile de tournesol, l'huile de colza et leurs mélanges, présente un fort taux d'acide oléique (plus de 60%, plus préférentiellement plus de 70% en poids).

De tels triesters à fort taux d'acide oléique sont bien connus, ils ont été décrits par exemple dans la demande WO 02/088238, à titre d'agents plastifiants dans des bandes de roulement pour pneumatiques.

Le taux de plastifiant liquide présentant une température de transition vitreuse inférieure à -70°C dans la composition dans la composition du flanc externe du pneumatique selon l'invention peut être compris dans un domaine allant de 1 à 50 pce, de préférence de 2 à 40 pce, de préférence encore de 5 à 30 pce.

### 11-3 Charge renforçante

La composition du flanc externe du pneumatique selon l'invention comprend en outre une charge renforçante, connue pour ses capacités à renforcer une composition de caoutchouc utilisable pour la fabrication de pneumatiques.

La charge renforçante peut comprendre du noir de carbone et/ou de la silice. Avantageusement, la charge renforçante comprend majoritairement, de préférence exclusivement, du noir de carbone.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Avantageusement, le noir de carbone comprend majoritairement, de préférence exclusivement, un noir de carbone présentant une surface spécifique BET inférieure à 70 m²/g, de préférence inférieure à 50 m²/g, de préférence une surface spécifique BET comprise dans un domaine allant de 11 à 49 m²/g, de préférence encore de 21 à 49 m²/g.

La surface spécifique BET des noirs de carbone est mesurée selon la norme D6556-10 [méthode multipoints (au minimum 5 points) - gaz : azote - domaine de pression relative P/P0 : 0.1 à 0.3].

Les silices utilisables dans le cadre de la présente invention peuvent être toute silice connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative p/po : 0.05 à 0.17). La surface spécifique CTAB de la silice est déterminée selon la norme française NF T 45-007 de novembre 1987 (méthode B).

De préférence, la silice présente une surface spécifique BET inférieure à 200 m²/g et/ou une surface spécifique CTAB est inférieure à 220 m²/g, de préférence une surface spécifique BET comprise dans un domaine allant de 125 à 200 m²/g et/ou une surface spécifique CTAB comprise dans un domaine allant de 140 à 170 m²/g.

A titres de silices utilisables dans le cadre de la présente invention, on citera par exemple les silices précipitées hautement dispersibles (dites "HDS") « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

Pour coupler la silice renforçante à l'élastomère diénique, on utilise de manière bien connue un agent de couplage (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants: WO 02/083782, WO 02/30939, WO 02/31041, WO 2007/061550, WO 2006/125532, WO 2006/125533, WO 2006/125534, US 6,849,754, WO 99/09036, WO 2006/023815, WO 2007/098080, WO 2010/072685 et WO 2008/055986.

On peut citer notamment les composés alkoxysilane-polysulfure, en particulier les polysulfures de bis-(trialkoxylsilylpropyle), tout particulièrement le disulfure de bis 3-triéthoxysilylpropyle (en abrégé "TESPD") et le tétrasulfure de bis 3-triéthoxysilylpropyle (en abrégé "TESPT"). On rappelle que le TESPD, de formule [(C₂H₅O)₃Si(CH₂)₃S]₂, est notamment commercialisé par la société Degussa sous les dénominations Si266 ou Si75 (dans le second cas, sous forme d'un mélange de disulfure (à 75% en poids) et de polysulfures). Le TESPT, de formule [(C₂H₅O)₃Si(CH₂)₃S]₂ est commercialisé notamment par la société Degussa sous la dénomination Si69 (ou X50S lorsqu'il est supporté à 50% en poids sur du noir de carbone), sous la forme d'un mélange commercial de polysulfures Sx avec une valeur moyenne pour x qui est proche de 4.

Le taux de charge renforçante dans la composition est de préférence compris dans un domaine allant de 5 à 70 pce, de préférence de 5 à 55 pce, de préférence encore de 5 à 45 pce.

### 11-4 Système de réticulation

Le système de réticulation de la composition du flanc externe du pneumatique selon l'invention peut être à base de soufre moléculaire et/ou de donneurs de soufre et/ou de peroxyde, bien connus de l'homme du métier.

Le système de réticulation est préférentiellement un système de vulcanisation à base de soufre (soufre moléculaire et/ou agent donneur de soufre).

Le soufre est utilisé à un taux préférentiel compris entre 0,5 et 10 pce. Avantageusement, le taux de soufre est compris entre 0,5 et 2 pce, de préférence entre 0,5 et 1,5 pce, de préférence encore entre 0,5 et 1,4 pce.

La composition de la bande de roulement du pneumatique selon l'invention comprend avantageusement un accélérateur de vulcanisation, qui est de préférence choisi dans le groupe constitué par les accélérateurs du type thiazoles ainsi que leurs dérivés, des accélérateurs de types sulfénamides, thiourées et de leurs mélanges. Avantageusement, l'accélérateur de vulcanisation est choisi dans le groupe constitué par le disulfure de 2-mercaptobenzothiazyle (MBTS), le N-cyclohexyl-2-benzothiazyle sulfénamide (CBS), le N,N-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le disulfure de morpholine, le N-morpholino-2-benzothiazyle sulfénamide (MBS), le dibutylthiourée (DBTU), et de leurs mélanges. De manière particulièrement préférée, l'accélérateur primaire de vulcanisation est le N-cyclohexyl-2-benzothiazyle sulfénamide (CBS).

Le taux d'accélérateur de vulcanisation est préférentiellement compris dans un domaine allant de 0,2 à 10 pce, de préférence de 0,2 à 7pce, de préférence encore de 0,6 à 2 pce.

De manière avantageuse, le ratio pondéral soufre ou donneur de soufre / accélérateur de vulcanisation varie de 0,8 à 1,2.

### 11-5 Additifs divers

Les compositions de caoutchouc du flanc externe du pneumatique selon l'invention peuvent comporter également tout ou partie des additifs usuels, connus de l'homme de l'art et habituellement utilisés dans les compositions de caoutchouc pour pneumatiques, en particulier de flanc externe, comme par exemple des plastifiants autres que ceux précités (telles que des résines plastifiantes), des charges (autres que celles précitées), des pigments, des agents de protection tels que cires anti-ozone, anti-ozonants chimiques, anti-oxydants, des agents anti-fatigue.

### 11-6 Préparation des compositions de caoutchouc

La composition de caoutchouc conforme à l'invention est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les plastifiants, les éventuels autres additifs divers, à l'exception du système de réticulation. L'incorporation de la charge à l'élastomère peut être réalisée en une ou plusieurs fois en malaxant thermomécaniquement. Dans le cas où la charge, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges présents dans la composition qui ne sont pas sous la forme de masterbatch, ainsi que les éventuels autres additifs divers autres que le système de réticulation. La phase non-productive est réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme flanc externe de pneumatique pour véhicule tourisme.

La composition peut être soit à l'état cru (avant réticulation ou vulcanisation), soit à l'état cuit (après réticulation ou vulcanisation), peut être un produit semi-fini qui peut être utilisé dans un pneumatique.

La cuisson peut être conduite, de manière connue de l'homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

### III- EXEMPLES

### III-1 Mesures et test utilisés

### Profondeur de stries

Pour mesurer la profondeur de stries, on utilise une éprouvette de flanc de pneumatique de section carrée (côté 15 cm) et d'épaisseur 9 mm obtenue par moulage. La cuisson des éprouvettes est réalisée sous une pression de 16 bars pendant 15 minutes à 170°C. L'éprouvette est montée sur la table d'une machine-outil. Sur le porte-outil de la machine, est fixé un cône en acier dur de 7 mm de long dont l'angle au sommet est de 75°. Pour la réalisation des cônes, le rayon de courbure à l'extrémité est spécifié inférieur à 0,1 mm. Les cônes sont nettoyés avant usage. L'enfoncement du cône depuis le point de premier contact (indentation) est de 5 mm. Après obtention de l'enfoncement souhaité, le cône est mis en mouvement parallèle à la plaque de mélange, à une vitesse de 30 mm par seconde. On relève l'aspect des rayures qui apparaissent à l'arrière du cône par suite du déchirement du mélange, à une distance suffisante, de l'ordre du centimètre, du point de premier enfoncement du cône dans le mélange de manière à ce que la rayure observée ne soit pas affectée par un éventuel phénomène transitoire, et devienne indépendante de la longueur glissée.

Pour comparer le flanc utilisable selon l'invention avec le flanc témoin, on utilise la microscopie confocale pour mesurer la profondeur des rayures. Chaque mesure par microscopie confocale est réalisée en trois points différents (deux sur le caoutchouc à proximité de la rayure et un au fond de la rayure), où celle-ci est suffisamment ouverte pour que la mesure soit réalisable.

Cette mesure de la profondeur de rayure est réalisée en dix emplacements différents de la rayure, puis la moyenne des dix mesures de profondeur est calculée. Pour plus de lisibilité, les résultats sont indiqués en base 100 (pourcentage), la valeur 100 étant attribuée au témoin. Un résultat supérieur à 100 indique une diminution de la valeur concernée. Ainsi, un pourcentage supérieur à 100% signifie que la rayure est moins profonde que celle du flanc de pneumatique de référence.

*Propriétés dynamiques (module de cisaillement dynamique (G^{∗}) et module de perte (G"))* Les propriétés dynamiques G^{∗} et G" sont mesurées sur un viscoanalyseur (Metravib V A4000), selon la norme ASTM D 5992 - 96. On enregistre la réponse d'un échantillon de composition vulcanisée voulue (éprouvette cylindrique de 2 mm d'épaisseur et de 78,5 mm2 de section), soumis à une sollicitation sinusoïdale en cisaillement simple alterné, à la fréquence de 10Hz, à une température de 23°C et selon la norme ASTM D 1349 - 99. On effectue un balayage en amplitude de déformation crête à crête de 0,1 à 50% (cycle aller), puis de 50% à 1% (cycle retour). Les résultats exploités sont le module complexe de cisaillement dynamique (G^{∗}) et le module de perte (G"). Pour le cycle retour, on indique la valeur de G^{∗} à 20% de déformation, ainsi que la valeur de G" à 20% de déformation.

Pour plus de lisibilité, les résultats sont indiqués en base 100 (pourcentage), la valeur 100 étant attribuée au témoin. Un résultat inférieur à 100 indiquant une augmentation de la valeur concernée, et inversement, un résultat supérieur à 100, indiquera une diminution de la valeur concernée. Autrement dit, un pourcentage supérieur à 100% signifie que le module de perte G" baisse, indiquant une diminution de l'hystérèse est donc une amélioration de la résistance au roulement. De même, si le module complexe de cisaillement dynamique G^{∗} baisse, alors le pourcentage relatif à G^{∗} augmente. La rigidité est dans ce cas améliorée, notamment pour une utilisation dans une composition de flanc externe pour pneumatique.

### Test ozone développé en laboratoire

Pour mesurer la résistance à l'ozone des matériaux, plusieurs lanières d'éprouvette sont tendues à différentes déformations allant de 10% de déformation à 100% de déformation par pas de 10% à partir de 10% de déformation, puis par pas de 5% à partir de 50% de déformation. Au bout de 240 heures d'exposition à une température de 38°C et un taux d'ozone de 40 ppm, la valeur maximum d'extension pour laquelle l'éprouvette n'est pas rompue est prise en compte. Ceci permet un classement des matériaux.

### 111-2 Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, l'élastomère thermoplastique, la charge renforçante, le plastifiant liquide, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 150°C.

On récupère le mélange ainsi obtenu, on le refroidit puis on incorpore du soufre et l'accélérateur de vulcanisation, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

Les échantillons ainsi produits ont été cuits pendant 25 minutes à 150°C dans une presse à cloche. Les échantillons ont été analysés après avoir été refroidit 24 heures à température ambiante.

Ici, la mise en œuvre des compositions élastomériques est effectuée au moyen d'un mélangeur du type Haake RM 3000 de 360 cm³ avec des palettes de type CAM.

### 111-3 Test de caoutchouterie

Les exemples présentés dans le Tableau 1 ont pour objet de comparer la résistance aux agressions extérieures, la résistance au roulement et la rigidité de compositions conformes à l'invention (C1, C2) à celle d'une composition témoin (T1) qui diffère de la composition C1 qu'en ce que le plastifiant liquide présente une température de transition vitreuse supérieur à -70°C. Leurs formulations (en pce) et leurs propriétés ont été résumées dans le Tableau 1 ci-après.

**Tableau 1**

| **Ingrédients** | **T1** | **C1** | **C2** |
|---|---|---|---|
| Caoutchouc polybutadiène⁽¹⁾ | 65 | 65 | 75 |
| SBS⁽²⁾ | 35 | 35 | 25 |
| Noir de carbone⁽³⁾ | 20 | 20 | 20 |
| Huile⁽⁴⁾ | 15 | - | - |
| Huile⁽⁵⁾ | - | 15 | 15 |
| Antioxydant⁽⁶⁾ | 1.5 | 1.5 | 1.5 |
| Cire anti-ozone⁽⁷⁾ | 1 | 1 | 1 |
| Acide stéarique | 1 | 1 | 1 |
| Oxyde de zinc | 2.4 | 2.4 | 2.4 |
| Soufre | 1.2 | 1.2 | 1.2 |
| Accélérateur⁽⁸⁾ | 1.2 | 1.2 | 1.2 |
| **Propriétés** | | | |
| Strie (%) | 100 | 115 | 133 |
| Module G" (%) | 100 | 127 | 120 |
| Module G^{∗} (%) | 100 | 122 | 123 |

| | | | |
|---|---|---|---|
| (1) BR ND ML63 (2) Copolymère bloc comprenant 31% en poids de styrène de série D1101 de la société Kraton (3) noir de carbone N550 (dénomination selon la norme ASTM D-1765), de la société Cabot (4) Huile MES « Catenex SNR » de la société Shell (5) Huile de tournesol à 85 % en poids d'acide oléique « Lubrirob Tod 1880 » de la société Novance (6) Antioxydant « Santoflex 6PPD » de la société Solutia (7) Cire anti-ozone « VARAZON 4959 » de la société Sasol Wax (8) Accélérateur « Santocure CBS » de la société Solutia | | | |

Ces résultats montrent les compositions conformes à l'invention permettant d'améliorer la résistance aux agressions et l'hystérèse par rapport aux compositions témoin, tout en autorisant des propriétés dynamiques (la rigidité G^{∗}) conformes avec une utilisation en pneumatiques. Il a par ailleurs été constaté que les compositions conformes à l'invention présentent de très bonnes résistances à l'ozone (données non présentées).

## Revendications

1. Pneumatique pourvu d'un flanc externe, ledit flanc externe comprenant une composition à base d'au moins :
- une matrice élastomérique comprenant au moins un élastomère diénique choisi dans le groupe constitué par les polymères butadiéniques ayant une température de transition vitreuse inférieure ou égale à -50°C, et un élastomère thermoplastique comprenant au moins un bloc élastomère et au moins un bloc thermoplastique, l'élastomère thermoplastique ne comprenant pas de bloc polyisobutylène,
- un plastifiant liquide présentant une température de transition vitreuse inférieure à -70°C,
- un système de réticulation, et
- une charge renforçante.

2. Pneumatique selon la revendication 1, dans lequel le bloc élastomère de l'élastomère thermoplastique présente une température de transition vitreuse inférieure ou égale à -50°C.

3. Pneumatique selon la revendication 1 ou 2, dans lequel le bloc élastomère de l'élastomère thermoplastique est choisi dans le groupe constitué par les polyisoprènes, les polybutadiènes, les copolymères de styrène et de butadiène, et les mélanges de ces élastomères, ces élastomères étant non hydrogénés ou partiellement hydrogénés.

4. Pneumatique selon l'une quelconque des revendications précédentes, dans lequel le bloc thermoplastique de l'élastomère thermoplastique est choisi dans le groupe constitué par les polyoléfines, les polyuréthanes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et les mélanges de ces polymères.

5. Pneumatique selon l'une quelconque des revendications précédentes, dans lequel l'élastomère thermoplastique est choisi dans le groupe constitué par les copolymères à blocs styrène/ butadiène (SB), styrène/ isoprène (SI), styrène/ butadiène/ isoprène (SBI), styrène/ butadiène/ isoprène/ styrène (SBIS), styrène/butadiène/styrène (SBS), styrène/isoprène/styrène (SIS), styrène/copolymère butadiène-styrène éventuellement partiellement hydrogéné/styrène (SOE), et les mélanges de ces copolymères.

6. Pneumatique selon l'une quelconque des revendications précédentes, dans lequel l'élastomère thermoplastique est choisi dans le groupe constitué par les copolymères à blocs styrène/butadiène/styrène (SBS), styrène/copolymère butadiène-styrène éventuellement partiellement hydrogéné/styrène (SOE), et les mélanges de ces copolymères.

7. Pneumatique selon l'une quelconque des revendications précédentes, dans lequel le taux d'élastomère thermoplastique dans la composition est compris dans un domaine allant de 1 à 50 pce, de préférence de 5 à 45 pce, plus préférentiellement de 10 à 40 pce, plus préférentiellement encore de 15 à 35 pce.

8. Pneumatique selon l'une quelconque des revendications précédentes, dans lequel l'élastomère diénique choisi dans le groupe constitué par les polymères butadiéniques ayant une température de transition vitreuse inférieure ou égale à -50°C, est choisi dans le groupe constitué par les polybutadiènes, les copolymères de butadiène, de préférence les copolymères de butadiène-styrène, les copolymères d'isoprène-butadiène, les copolymères d'isoprène-butadiène-styrène, et les mélanges de ces élastomères.

9. Pneumatique selon l'une quelconque des revendications précédentes, dans lequel le taux d'élastomère diénique choisi dans le groupe constitué par les polymères butadiéniques ayant une température de transition vitreuse inférieure ou égale à - 50°C, dans la composition, est compris dans un domaine allant de 50 à 99 pce, de préférence de 55 à 95 pce, plus préférentiellement de 60 à 90 pce, plus préférentiellement encore de 65 à 85 pce.

10. Pneumatique selon l'une quelconque des revendications précédentes, dans lequel le plastifiant liquide présentant une température de transition vitreuse inférieure à -70°C comprend de 45 à 100% en poids, de triester d'acide gras insaturé de glycérol.

11. Pneumatique selon la revendication 10, dans lequel l'acide gras du triester d'acide gras insaturé de glycérol comprend plus de 60% en poids, de préférence plus de 70% en poids, d'un acide gras choisi dans le groupe constitué par l'acide oléique, l'acide linoléique, l'acide linolénique et leurs mélanges.

12. Pneumatique selon la revendication 10 ou 11, dans lequel le triester d'acide gras insaturé de glycérol est du trioléate de glycérol.

13. Pneumatique selon l'une quelconque des revendications précédentes, dans lequel le plastifiant liquide présentant une température de transition vitreuse inférieure à -70°C est une huile végétale, de préférence une huile végétale choisie dans le groupe constitué par l'huile de tournesol, l'huile de colza et leurs mélanges.

14. Pneumatique selon l'une quelconque des revendications précédentes, dans lequel le taux de plastifiant liquide présentant une température de transition vitreuse inférieure à -70°C est compris dans un domaine allant de 1 à 50 pce, de préférence de 2 à 40 pce.

15. Pneumatique selon l'une quelconque des revendications précédentes, dans lequel la charge renforçante comprend du noir de carbone et/ou de la silice.

## Patentansprüche

1. Reifen mit einer äußeren Seitenwand, wobei die äußere Seitenwand eine Zusammensetzung auf Basis von mindestens:
- einer Elastomermatrix, umfassend mindestens ein Dienelastomer aus der Gruppe bestehend aus Butadien-Polymeren mit einer Glasübergangstemperatur kleiner oder gleich -50 °C und ein thermoplastisches Elastomer mit mindestens einem elastomeren Block und mindestens einem thermoplastischen Block, wobei das thermoplastische Elastomer keinen Polyisobutylen-Block umfasst,
- einem flüssigen Weichmacher mit einer Glasübergangstemperatur von weniger als -70 °C,
- einem Vernetzungssystem und
- einem verstärkenden Füllstoff
umfasst.

2. Reifen nach Anspruch 1, wobei der elastomere Block des thermoplastischen Elastomers eine Glasübergangstemperatur kleiner oder gleich -50 °C aufweist.

3. Reifen nach Anspruch 1 oder 2, wobei der elastomere Block des thermoplastischen Elastomers aus der Gruppe bestehend aus Polyisoprenen, Polybutadienen, Copolymeren von Styrol und Butadien und Mischungen dieser Elastomere ausgewählt ist, wobei diese Elastomere unhydriert oder teilhydriert sind.

4. Reifen nach einem der vorhergehenden Ansprüche, wobei der thermoplastische Block des thermoplastischen Elastomers aus der Gruppe bestehend aus Polyolefinen, Polyurethanen, Polyamiden, Polyestern, Polyacetalen, Polyethern, Polyphenylensulfiden, Polyfluorverbindungen, Polystyrolen, Polycarbonaten, Polysulfonen, Polymethylmethacrylat, Polyetherimid, thermoplastischen Copolymeren und Mischungen dieser Polymere ausgewählt ist.

5. Reifen nach einem der vorhergehenden Ansprüche, wobei das thermoplastische Elastomer aus der Gruppe bestehend aus Blockcopolymeren des Typs Styrol/Butadien (SB), Styrol/Isopren (SI), Styrol/Butadien/Isopren (SBI), Styrol/Butadien/Isopren/Styrol (SBIS), Styrol/Butadien/Styrol (SBS), Styrol/Isopren/Styrol (SIS), Styrol/gegebenenfalls teilhydriertes Butadien-Styrol-Copolymer/Styrol (SOE) und Mischungen dieser Copolymere ausgewählt ist.

6. Reifen nach einem der vorhergehenden Ansprüche, wobei das thermoplastische Elastomer aus der Gruppe bestehend aus Blockcopolymeren des Typs Styrol/Butadien/Styrol (SBS) und Styrol/gegebenenfalls teilhydriertes Butadien-Styrol-Copolymer/Styrol (SOE) und Mischungen dieser Copolymere ausgewählt ist.

7. Reifen nach einem der vorhergehenden Ansprüche, wobei der Gehalt an thermoplastischem Elastomer in der Zusammensetzung in einem Bereich von 1 bis 50 phe, vorzugsweise von 5 bis 45 phe, weiter bevorzugt von 10 bis 40 phe, noch weiter bevorzugt von 15 bis 35 phe, liegt.

8. Reifen nach einem der vorhergehenden Ansprüche, wobei das aus der Gruppe bestehend aus Butadien-Polymeren mit einer Glasübergangstemperatur kleiner oder gleich -50 °C ausgewählte Dienelastomer aus der Gruppe bestehend aus Polybutadienen, Butadien-Copolymeren, vorzugsweise Butadien-Styrol-Copolymeren, Isopren-Butadien-Copolymeren, Isopren-Butadien-Styrol-Copolymeren, und Mischungen dieser Elastomere ausgewählt ist.

9. Reifen nach einem der vorhergehenden Ansprüche, wobei der Gehalt an aus der Gruppe bestehend aus Butadien-Polymeren mit einer Glasübergangstemperatur kleiner oder gleich -50 °C ausgewähltem Dienelastomer in der Zusammensetzung in einem Bereich von 50 bis 99 phe, vorzugsweise von 55 bis 95 phe, weiter bevorzugt von 60 bis 90 phe, noch weiter bevorzugt von 65 bis 85 phe, liegt.

10. Reifen nach einem der vorhergehenden Ansprüche, wobei der flüssige Weichmacher mit einer Glasübergangstemperatur von weniger als -70 °C 45 bis 100 Gew.-% eines Triesters von ungesättigter Fettsäure und Glycerin umfasst.

11. Reifen nach Anspruch 10, wobei die Fettsäure des Triesters von ungesättigter Fettsäure und Glycerin mehr als 60 Gew.-%, vorzugsweise mehr als 70 Gew.-%, einer Fettsäure aus der Gruppe bestehend aus Ölsäure, Linolsäure, Linolensäure und Mischungen davon umfasst.

12. Reifen nach Anspruch 10 oder 11, wobei es sich bei dem Triester von ungesättigter Fettsäure und Glycerin um Glycerintrioleat handelt.

13. Reifen nach einem der vorhergehenden Ansprüche, wobei es sich bei dem flüssigen Weichmacher mit einer Glasübergangstemperatur von weniger als -70 °C um ein Pflanzenöl, vorzugsweise ein Pflanzenöl aus der Gruppe bestehend aus Sonnenblumenöl, Rapsöl und Mischungen davon, handelt.

14. Reifen nach einem der vorhergehenden Ansprüche, wobei der Gehalt an flüssigem Weichmacher mit einer Glasübergangstemperatur von weniger als -70 °C in einem Bereich von 1 bis 50 phe, vorzugsweise von 2 bis 40 phe, liegt.

15. Reifen nach einem der vorhergehenden Ansprüche, wobei der verstärkende Füllstoff Ruß und/oder Kieselsäure umfasst.

## Claims

1. Tyre provided with an external sidewall, the said external sidewall comprising a composition based on at least:
- an elastomeric matrix comprising at least one diene elastomer selected from the group consisting of butadiene polymers having a glass transition temperature of less than or equal to -50°C, and a thermoplastic elastomer comprising at least one elastomer block and at least one thermoplastic block, the thermoplastic elastomer not comprising a polyisobutylene block,
- a liquid plasticizer exhibiting a glass transition temperature of less than -70°C,
- a crosslinking system, and
- a reinforcing filler.

2. Tyre according to Claim 1, in which the elastomer block of the thermoplastic elastomer exhibits a glass transition temperature of less than or equal to -50°C.

3. Tyre according to Claim 1 or 2, in which the elastomer block of the thermoplastic elastomer is selected from the group consisting of polyisoprenes, polybutadienes, copolymers of styrene and of butadiene, and the mixtures of these elastomers, these elastomers being non-hydrogenated or partially hydrogenated.

4. Tyre according to any one of the preceding claims, in which the thermoplastic block of the thermoplastic elastomer is selected from the group consisting of polyolefins, polyurethanes, polyamides, polyesters, polyacetals, polyethers, polyphenylene sulfides, polyfluorinated compounds, polystyrenes, polycarbonates, polysulfones, poly(methyl methacrylate), polyetherimide, thermoplastic copolymers and the mixtures of these polymers.

5. Tyre according to any one of the preceding claims, in which the thermoplastic elastomer is selected from the group consisting of styrene/butadiene (SB), styrene/isoprene (SI), styrene/butadiene/isoprene (SBI), styrene/butadiene/isoprene/styrene (SBIS), styrene/butadiene/styrene (SBS), styrene/isoprene/styrene (SIS) and styrene/optionally partially hydrogenated butadiene-styrene copolymer/styrene (SOE) block copolymers and the mixtures of these copolymers.

6. Tyre according to any one of the preceding claims, in which the thermoplastic elastomer is selected from the group consisting of styrene/butadiene/styrene (SBS) and styrene/optionally partially hydrogenated butadiene-styrene copolymer/styrene (SOE) block copolymers and the mixtures of these copolymers.

7. Tyre according to any one of the preceding claims, in which the content of thermoplastic elastomer in the composition is within a range extending from 1 to 50 phr, preferably from 5 to 45 phr, more preferentially from 10 to 40 phr, more preferentially still from 15 to 35 phr.

8. Tyre according to any one of the preceding claims, in which the diene elastomer selected from the group consisting of butadiene polymers having a glass transition temperature of less than or equal to -50°C is selected from the group consisting of polybutadienes, butadiene copolymers, preferably butadiene/styrene copolymers, isoprene/butadiene copolymers and isoprene/butadiene/styrene copolymers, and the mixtures of these elastomers.

9. Tyre according to any one of the preceding claims, in which the content of diene elastomer selected from the group consisting of butadiene polymers having a glass transition temperature of less than or equal to -50°C, in the composition, is within a range extending from 50 to 99 phr, preferably from 55 to 95 phr, more preferentially from 60 to 90 phr, more preferentially still from 65 to 85 phr.

10. Tyre according to any one of the preceding claims, in which the liquid plasticizer exhibiting a glass transition temperature of less than -70°C comprises from 45% to 100% by weight of glycerol unsaturated fatty acid triester.

11. Tyre according to Claim 10, in which the fatty acid of the glycerol unsaturated fatty acid triester comprises more than 60% by weight, preferably more than 70% by weight, of a fatty acid selected from the group consisting of oleic acid, linoleic acid, linolenic acid and their mixtures.

12. Tyre according to any one of Claims 10 to 11, in which the glycerol unsaturated fatty acid triester is glycerol trioleate.

13. Tyre according to any one of the preceding claims, in which the liquid plasticizer exhibiting a glass transition temperature of less than -70°C is a vegetable oil, preferably a vegetable oil selected from the group consisting of sunflower oil, rapeseed oil and their mixtures.

14. Tyre according to any one of the preceding claims, in which the content of liquid plasticizer exhibiting a glass transition temperature of less than -70°C is within a range extending from 1 to 50 phr, preferably from 2 to 40 phr.

15. Tyre according to any one of the preceding claims, in which the reinforcing filler comprises carbon black and/or silica.
